# EUROPÄISCHE PATENTSCHRIFT

(11) **EP 0 730 521 B1**
(45) Veröffentlichungstag und Bekanntmachung des Hinweises auf die Patenterteilung: **14.10.1998**
(21) Anmeldenummer: 95900648.7
(22) Anmeldetag: 21.11.1994
(51) Int. Cl.: B29C 43/22, E01C 13/04, E04F 13/08, B29D 31/00

(54) **VERFAHREN UND VORRICHTUNG ZUM HERSTELLEN EINES BAHNENFÖRMIGEN BELAGWERKSTOFFES**
PROCESS AND DEVICE FOR PRODUCING A WEB-LIKE COVERING MATERIAL
PROCEDE ET DISPOSITIF POUR LA FABRICATION D'UN MATERIAU DE REVETEMENT EN FORME DE BANDE

(30) Priorität: 27.11.1993 DE 4340478
(43) Veröffentlichungstag der Anmeldung: 11.09.1996
(73) Patentinhaber: Arnds, Dieter, 33709 Halle-Hesseln (DE)
(72) Erfinder: Arnds, Dieter, 33709 Halle-Hesseln (DE)
(74) Vertreter: Allgeier, Kurt
(86) Internationale Anmeldenummer: DE9401368
(87) Internationale Veröffentlichungsnummer: WO9514564

(56) Entgegenhaltungen:
- EP-A- 0 046 526
- EP-A- 0 135 595
- DE-A- 1 658 448
- DE-A- 3 017 899
- FR-A- 2 112 547
- FR-A- 2 500 025
- US-A- 4 744 189
- US-A- 5 020 293

## Beschreibung

Die Erfindung betrifft Verfahren zum Herstellen eines bahnenförmigen Belagwerkstoffes aus einer verdichteten Mischung aus Gummiteilen, insbesondere Gummiabfällen, unter Benutzung eines umlaufenden endlosen Transportbandes, auf welches die Schicht aus einer bereits anreagierten Mischung aus zerkleinerten Gummiabfällen und/oder Gummigranulat aus Neu- oder Altgummi mit einem lösungsmittelfreien PU-Bindemittel aufgebracht wird, gemäß dem Oberbegriff der Ansprüche 1 und 2.

Die Erfindung betrifft ferner Vorrichtungen zum Herstellen eines bahnenförmigen Belagwerkstoffes in ein- oder mehrlagiger Ausführung.

Ein Verfahren und eine Vorrichtung dieser Art ist beispielsweise aus der EP-A-0 135 595 bekannt.

Der Erfindung liegt die Aufgabe zugrunde, dieses aus der EP-A-0 135 595 bekannte Herstellverfahren dahingehend zu verbessern, dass Beläge über die bekannten Standards hinaus für sehr verschiedenartige Verwendungszwecke und somit mit den verschiedenartigsten Eigenschaften und Ausgestaltungen nach dem weiter entwickelten Basisverfahren und daher auch auf einer ebenfalls vervollkommneten Transportband-Vorrichtung erzeugt werden können, und dass diese Beläge ferner in ihren praktischen Anwendungs- und Verlege-Handhabung optimierbar werden.

Bekannt ist die ein- und mehrlagige Herstellung von kunststoffgebundenen Gummi-Bodenbelägen für Wohn-, Büro- und Industrieräume wie auch für Sporthallen und Sportfelder als Bahnen oder Platten mit glatten Oberflächen. Für Sportstätten, z.B. Laufbahnen für Leichtathleten oder Flächen für alle Arten von Ballspielen werden aber Beläge mit unterschiedlicher Oberflächenstruktur benötigt, um sportfunktionellen und sicherheitstechnischen Anforderungen zu genügen. Daher werden verlegte Beläge mit nachträglichen Beschichtungen mit oder ohne Granulateinstreuung versehen, was hohen zusätzlichen Kostenaufwand erfordert und bei im Freien verlegten Belägen witterungsabhängig ist. Beläge dieser Art, vor allem für Sportstätten, lassen in der Regel punkt- und kleinflächenelastische Eigenschaften vermissen, insbesondere bei Feuchtigkeit bzw. Nässe und im kalten oder gefrorenen Zustand.

Nach der bekannten Lehre der EP-A-0 135 595 und der DE-A-1 658 448 soll eine hohe Elastizität dadurch erreicht werden, dass die aus Gummiteilchen oder Gummiabfällen und einem Bindemittel unter Druckanwendung und Wärmebeaufschlagung hergestellten Beläge verdichtet unter leichter Vorspannung lose auf eine Tragschicht aufgelegt werden. Die Nachteile hinsichtlich der Oberflächengestaltung und des Mangels an kleinflächenelastischen Eigenschaften werden jedoch nicht behoben.

Ferner werden Bindemittelmengen von 8 bis 10 % (EP 0 135 595, Seite 4) und 5:1 bis 12:1 = 8,33 bis 20 % (DE-A-16 58 448 Patentanspruch 1) verwendet. Die entsprechend diesen Vorgaben hergestellten Beläge müssen wegen einerseits ihrer geringen Bindemittelgehalte und andererseits der Zuschläge als hohlraumreich gelten. Dadurch werden die jeweils gestellten Anforderungen, nämlich Sportboden-Beläge einerseits und elastische Beläge für Industrie, dem Isolations-, Antidröhn- und Strassenbereich andererseits unter Berücksichtigung der obengenannten Nachteile wenigstens teilweise erfüllt. Durch die hohlraumreiche Struktur wird eine hohe Elastifizierung der Beläge und damit deren Haupteigenschaft erreicht. Durch eine Erhöhung des Bindemittelanteils wesentlich über 20% wären die Beläge mit dieser Zusammensetzung jedoch nicht elastisch genug, sondern zu starr und zu brüchig, so dass sie nicht für diese Zwecke eingesetzt werden könnten.

Weitere den Anwendungsbereich einschränkende Eigenschaften von bekannten Belägen dieser Art sind die Aufnahme grösserer Wassermengen (Schwammwirkung) sowie die Anfälligkeit gegen Chemikalien, welche wegen deren Porosität in diese eindringen und beschädigen können. Auch lassen sich bestimmte Gebrauchseigenschaften wie Gleitreibungswert oder Rollstuhlfestigkeit für die Anwendungsbereiche Wohnen, Gewerbe, Büro, Flughäfen, Bahnhöfe, Hotels, Veranstaltungshallen, Turn- und Sportsäle etc. mit definierten Qualitätsmerkmalen nur sehr eingeschränkt erreichen. Dasselbe gilt auch für die optischen Ausgestaltungs- und Designmöglichkeiten, z.B. Mehrfarbendruck in Kombination mit bestimmten Oberflächenstrukturen.

Auch können die Herstellverfahren gemäss den genannten Veröffentlichungen EP-A-0 135 595 und DE-A-16 58 448 und die damit erzeugten Beläge aus anderen Gründen den gestellten Anforderungen nicht mehr entsprechen. Wegen der bei der Bandanlage produktionstechnisch nicht unterschreitbaren Mindestdicke von 8 bis 10 mm sind Aushärtezeiten von 8 bis 10 Minuten notwendig, so dass sich maximale Bandgeschwindigkeiten von 1,5 m/min ergeben. Diese erscheinen für eine moderne Grossproduktion wegen der geringen Jahresleistung von 320.000 m² einer Bandanlage nicht ausreichend.

Auch erscheinen die in der DE-A-16 58 448 offenbarten Verfahren und Erzeugnisse in jeder Hinsicht unzureichend, um den genannten Erfordernissen zu entsprechen. Nach dem dort beschriebenen Beispiel 1 werden für das Aufbringen auf ein Rohplanum drei Stunden Zeit benötigt und dann um 20% mittels einer Walze verdichtet. Dünnere Beläge (3 mm) können nur in einem besonderen Walzvorgang hergestellt werden.

Übertragen auf eine Bandanlage gemäss EP-A-0 135 595 ergeben sich bei diesem zähen Mischgut Verarbeitungsprobleme, da es erfahrungsgemäss zu Ungleichmässigkeiten bis zum Abriss kommt und ausreichende Bandgeschwindigkeiten nicht möglich sind.

Auf Grund der vorstehend beschriebenen Erkenntnisse über die mit den bekannten Verfahren herstellbaren Erzeugnisse hat das erfindungsgemässe Verfahren noch zusätzlichen Anforderungen zu genügen.

Die sich ergebende spezielle Aufgabe der Erfindung besteht darin, in einem kontinuierlichen Fertigungsprozess einen PVC-freien Boden- oder Wandungsbelag herzustellen, dessen mögliche strukturierte Oberfläche bei der Herstellung des Belags erzeugt werden kann. Der Belag soll weitestgehend unabhängig von den Aussentemperaturen punkt- und kleinflächenelastische Komponenten aufweisen sowie in einer kürzeren Produktionszeit kostengünstiger herstellbar sein. Es sollen insbesondere Aufwendungen für Material und Lohn sowie Kosten für die zur Herstellung erforderliche Vorrichtung vermindert werden. Die Anbringung des Belags auf gebundene oder ungebundene Unterbauten soll mit verhältnismässig geringem Aufwand in einem kurzen Zeitraum möglich sein.

Diese Aufgabe wird nach der Erfindung durch ein Verfahren gemäß Anspruch 1 und 2 und durch eine Vorrichtung gemäß Anspruch 17 und 18 gelöst.

Vorteilhafte Weiterbildungen der Erfindung sind Gegenstand der abhängigen Ansprüche.

Bei dieser Verfahrensgestaltung ist zu berücksichtigen, dass entsprechend der Aufgabe bahnenartige Beläge in vielfältigen Ausführungsarten und für sehr unterschiedliche Verwendungszwecke hergestellt werden sollen. Daher ist es je nach dem Verwendungszweck selbstverständlich, dass die zusätzlichen Bindemittel in unterschiedlicher Komposition und Auswahl beigemischt werden müssen.

Durch den Einsatz von fliessfähiger PU-Beimischungsmasse wird der erzeugte Belag praktisch hohlraumfrei kompakt und zeigt eine porenfreie geschlossene Oberfläche. Dadurch wird eine unkontrollierte Feuchtigkeitsaufnahme fast völlig verhindert. Die glatte porenfreie Oberfläche schützt den Belag auch vor dem Eindringen von Feuchtigkeit und Chemikalien. Das Belagmaterial ist je nach der erzeugten Dicke trotzdem bei geringer Elastizität plastisch verformbar und daher zur Oberflächen-Abdeckung flexibel an die Formgestaltung des jeweiligen Untergrundes anpassbar. Der jeweils gewünschte Härtegrad ist durch entsprechende Einstellung der Beschichtungsmasse und Komposition der Zuschläge in weiten Grenzen veränderlich. Daher können auch die gewünschten technologischen Werte wie Gleitreibungswert, Rollstuhlfestigkeit u.a.m. je nach Einsatzart des Belags verwirklicht werden.

Das kontinuierliche Herstellverfahren führt zu kompakten, flüssigkeitsundurchlässigen und daher hochwertigen Belägen; es erfordert einen geringen apparativem Aufwand, ermöglicht einem grossen Ausstoss und ist neu und fortschrittlich.

Eine abgewandelte Lösung der Aufgabe sieht vor, dass der auf das umlaufende endlose Transportband aufgebrachten Schicht als wichtiger zusätzlicher Mischungs-Bestandteil auch Polyurethan als Beimischungsmasse mittels einer Auftragstation und als weiteres Bindemittel Latex sowie mineralische Stoffe wie Quarzsand, Quarzkies, Splitte u. dgl. beigegeben werden. Latex als zugemischtes weiteres Bindemittel führt zu vorteilhaften Eigenschaften des Belags für bestimmte Anwendungsbereiche vor allem in Innenräumen; diese Beläge werden je nach den Zugabemengen von Latex weicher, nachgiebiger und angenehmer im Laufgefühl; sie vermindern das Trittschallgeräusch. Vorteilhaft ist auch, dass Latex wesentlich - bis zu 50% - kostengünstiger gegenüber PU-Beschichtungsmasse und gut verarbeitbar ist, was erhebliche Herstellvorteile erbringt.

Auch dieser Mischung können Granulate, Agglomerate, Fasern, Flocken oder Mehl aus Polyurethan, Polyvinylchlorid, Polypropylen, Polyamid, Polyethylen aus Primär-oder recycelten Sekundärstoffen oder aus Kork oder Holz zugegeben werden.

Das Verdichten der Mischung kann durch verschiedene Druckeinwirkungen erfolgen oder unter Vibratorwirkung. Dabei ist von Bedeutung, welcher Verdichtungsgrad in welchem Zeitraum erreicht werden soll. Es können auch andere bekannte Vorrichtungen hierzu benutzt werden, vorzugsweise Druckwalzen, Druckstempel, Band- oder Doppelbandpressen: neu für diesen Anwendungszweck sind horizontal und quer zur Bandbewegung oszillierend bewegliche Verdichtungsbohlen.

Die Anordnung, Auswahl und Aufeinanderfolge der Behandlung in diesen Einrichtungen in ihrer Gesamtheit und technologischer Konzeption und Auswahl, ermöglichen sehr unterschiedliche Erzeugnisse. Damit sind verschiedene Einwirkungen auf das Schichtgemisch möglich, und es kann die Verdichtungs- und vor allem die Aushärtephase auf nur noch zwischen 2 und 3 Minuten verkürzt werden. Je nach Länge des Transportbandes können relativ hohe Bandgeschwindigkeiten zwischen 7 und 15 m/min bei dünneren Einschicht-Belägen zwischen 1 und 3 mm erreicht werden. Somit ist eine Erhöhung der Produktivität des erfindungsgemässen Verfahrens und der Band-Anlage gegenüber bekannten Herstellverfahren auf Grund erhöhter Ausstossmengen um den Faktor 5 bis 10 möglich.

Nach dem erfindungsgemässen Verfahren können vor allem dünne Boden- und Wandbeschichtungsbeläge in hochbeanspruchbarer Qualität für Wohn- und Bürobereiche, in Industrie- und Hallenbauten für Aussen- und Innenraumbeschichtungen in technisch und wirtschaftlich sparsamer und günstiger Weise erzeugt werden. Sie können anstelle teurer Kork- oder Kautschuck-Beläge eingesetzt werden. Vor allem können vorteilhaft PVC-Beläge ersetzt werden, welche aus Umweltschutzgründen und wegen ihrer Gefährlichkeit im Brandfall vermieden werden sollen.

Die obengenannten Beimischungen können variiert und es können die gewünschten Eigenschaften der Beläge hinsichtlich ihrer Dichte, Oberflächenbeschaffenheit, Härte, Zähigkeit oder Flexibilität beeinflusst werden. Es können Beläge mit glatten oder profilierten Oberflächen erzeugt werden, durch Einprägen strukturierter Oberflächen mit Profiltiefen von etwa 0,4 bis 50 mm. Die Strukturbildung der Ober- und/oder Unterseite des Belagwerkstoffes kann während des Verdichtens oder danach mittels profilierter Druckwalzen, profilierter Transport- und Prägebänder und/oder profilierten Band- oder Doppelbandpressen ein- oder beidseitig erfolgen, so dass, angepasst an die technologisch bedingten Durchlaufzeiten des Belagwerkstoffes, dieser bereits während seiner Verarbeitung mit einer strukturierten Oberfläche versehen werden kann. Eine weitere Rationalisierung des Verfahrens wird erreicht, indem ein- und mehrlagige Belagwerkstoffe mit beidseitig glatter oder strukturierter Oberfläche nach dem Strukturiervorgang mittels einer Spaltanlage gespalten werden, so dass sich der Produktionsausstoss um 100% erhöht.

Eine Ausgestaltung des Verfahrens besteht darin, dass die Mischung vor oder nach dem Aushärten mit Beschichtungs- oder Versiegelungsmassen mit glatter Oberfläche oder einer durch Einstreugranulate erzeugten strukturierten Oberfläche versehen wird.

Bei hohen Anforderungen an die Elastizität des Belagwerkstoffes wird man den Anteil an Gummimaterialien grösser wählen, bei höheren Anforderungen an die Steifigkeit des Werkstoffes wird ein grösserer Anteil festerer, mineralischer Materialien mit PU-Beschichtungsmasse als Bindemittel gewählt. Die untere Belagschicht kann in ihrer Wirkung die Eigenschaften eines gebundenen Unterbaues bei gleichzeitiger Nutzung der in der unteren Belaglage befindlichen Elastizität für das gesamte Belagsystem ersetzen. Dabei kann die Dicke wenigstens einer Schicht des Belagwerkstoffes 2 bis 100 mm, die Dicke von weiteren Schichten je 0,5 bis 30 mm betragen. Die Herstellung sehr dünner Beläge weist auch auf andere Verwendungsmöglichkeiten hin, z. B. als Belag im Wohn- und Industriebodenbereich, besonders in Verbindung mit einer Faserheizung, und ist ausserdem kostengünstig.

Die Mischung kann für einlagige Beläge entsprechend folgende Anteile aufweisen: Anteil Bindemittel 2 bis 30 Gewichtsprozent, Anteil Gummigranulat und Beimischungen 70 bis 98 Gewichtsprozent (enthaltend auch PU-Beimischungsmasse); werdiese Anteile jeweils geringer gehalten, sind noch andere Anteile von Zuschlagstoffen möglich.

Nach einem weiteren Vorschlag können die Mischungsanteile bei mehrlagigen Belägen je weiterer Schicht einen PU-Beschichtungsanteil von wenigstens 20 Gewichtsprozent, einen Gummigranulatanteil von 20 bis 60 Gewichtsprozent und andere Anteile von 20 bis 60 Gewichtsprozentanteil aufweisen. Ferner ist es auch möglich, dass dem PU-Bindemittel 0,5 bis 50 Gewichtsprozent Anteile Wasser zugesetzt werden, um damit kürzere Abbindezeiten zu erzielen und die Herstellgeschwindigkeit zu erhöhen.

Zur Herstellung von mehrlagigen Belägen mit höheren elastischen Eigenschaften sind je weiterer Schicht die Mischungsanteile folgendermassen aufgegliedert: Anteil Bindemittel 2 bis 30%, Anteil Gummigranulat 70 bis 98%, andere Anteile 70 bis 98%.

Nach einer vorteilhaften Ausgestaltung kann zur verbesserten Dimensionsstabilität zwischen die Schichten mehrlagiger Beläge jeweils ein textiles Gittergewebe eingebracht werden.

Weiterhin kann nach einer anderen Möglichkeit vorgesehen werden, dass vor Aufbringen der ersten Schicht der Mischung auf das Transportband ein textiles Gitter- oder Trägergewebe und/oder Magnetstreifen und/oder textile Klettverschlusssysteme und/oder Faserheizungen, insbesondere Carbonfaserheizungen, aufgebracht und mit der darauf aufgebrachten ersten Schicht gebunden und fixiert werden. Mit dieser Massnahme werden bereits während der Herstellung des Belagwerkstoffes gute Voraussetzungen für dessen spätere Verlegung und Anwendung geschaffen. Auch können die genannten Halte-, Träger- und Heizmaterialien nachträglich auf die verdichtete, noch nicht ausgehärtete letzte, noch nicht ausreagierte Schicht der Mischung aufgetragen, angedrückt und gebunden werden.

Ein zusätzlicher Gegenstand der Erfindung bezieht sich auf die Vorrichtung zur Herstellung des Belagwerkstoffes nach Patentanspruch 17 Patentanspruch 18.

Eine vorteilhafte Weiterbildung der Vorrichtung ist darin zu sehen, dass das aus textilem Material oder Metall bestehende Transportband auf seiner Oberfläche eine als Trennschicht wirkende Beschichtung, vorzugsweise aus Silikon oder Teflon aufweist und/oder dass die Oberfläche des Transportbandes profiliert ausgebildet ist.

Besonders vorteilhaft ist es, wenn nach einem weiteren Merkmal das Transportband eine Faserheizung, insbesondere eine Carbonfaserheizung im Band und/oder an der Unter- und/oder Oberseite des Bandes aufweist.

Ferner kann es bei besonders dünnen Belägen vorteilhaft sein, wenn nach einem zusätzlichen Merkmal eine von einer Vorratsrolle abziehbare auf das Transportband auflegbare glatte oder profilierte Trennfolie vorgesehen ist.

Als zweckmässig hat sich erwiesen, wenn den auf die erste Schichtauftragung folgenden Schichtauftragungen zugeordnete Verdichtungseinrichtungen und Einrichtungen zur Wärmebeaufschlagung der auf das Transportband aufgelegten Schichten vorgesehen sind, und ferner, wenn die einer Schichtauftragung nachgeschaltete Verdichtungseinrichtung als bekannte Bandpresse oder Doppelbandpresse ausgelegt und mit einem Textil- oder Metallband versehen ist, welches eine Trennschicht vorzugsweise aus Silikon, Teflon o. dgl. aufweist.

In Abwandlung hiervon kann es ferner vorteilhaft sein, dass die einer Schichtauftragung nachgeschaltete Verdichtungsvorrichtung eine Bandpresse oder Doppelbandpresse mit einer einem Textil- oder Metallband profilierten Oberfläche ist, oder aber, wenn diese Bandpresse oder Doppelbandpresse eine Vorrichtung zur Zuführung wenigstens einer glatten oder profilierten Trennfolie zur ober- und/oder unterseitigen Auflage auf die Belagschicht aufweist.

Durch den bereits mit Haftmaterialien vorgefertigten Belagwerkstoff werden weitestgehend manuelle Klebe- und Anpassungsarbeiten auf der Baustelle ausgeschaltet, und die Verlegung kann innerhalb kürzerer Zeiträume und in einwandfreier Qualität erfolgen. Auch kommt es bei Verlegung auf befestigte Unterbauten nicht mehr zu einer so hohen Elastizitätsminderung wie bisher, da die durch die erfindungsgemässe Material-Mischung erzeugten kleinflächenelastischen Eigenschaften dies verhindern. Besonders vorteilhaft erweist sich die demontierbare Verlegung bei Mehrzweckhallen, in denen für unterschiedliche Sportarten, wie beispielsweise Leichtathletik, Volleyball, Tennis, Handball, ebenso verschiedenartige Bodensysteme benötigt werden. Ein schnelles Auf- und Abbauen des jeweils benötigten Belags ist bei Anwendung der Erfindung möglich.

Um eine bessere Bespielbarkeit von sehr kaltem oder gefrorenem Belagwerkstoff zu erreichen, können im Belagwerkstoff eingebrachte Faserheizungen, insbesondere Carbonfaserheizungen, zur Beheizung desselben und seiner räumlichen Umgebung, insbesondere auch von Oberbelägen sowie zur Erhaltung der Elastizität und Nutzungsmöglichkeit des Belagwerkstoffes vorgesehen sein. Durch die Nutzung der eingebauten Faserheizung können aufwendige Heizungsapparaturen, einschliesslich deren Wartungs- und Heizungskosten, entfallen.

Eine kontrollierte Gleitfähigkeit der Belagoberfläche wird erreicht, indem auf die strukturierte Oberseite des Belags nach Verlegung ein EPDM-Granulat von einer Körnung zwischen 0,02 bis 5 mm mit einem Gewicht von ca. 0,2 bis 2,0 kg/Quadratmeter aufgestreut wird.

Ausführungsbeispiele des erfindungsgemässen Verfahrens und der Vorrichtung sowie Anwendung des Belagwerkstoffes sind anhand von Zeichnungen nachfolgend beschrieben, und zwar zeigen:
- Fig. 1: Schematische Darstellung der gesamten Anlage zur Herstellung des erfindungsgemässen Belagwerkstoffes mit ausgewählten Vorrichtungen;
- Fig. 2: Anbringung des Belagwerkstoffes mittels Klettverschluss, Querschnittdarstellung;
- Fig. 3: Schnitt A-A durch Fig. 2;
- Fig. 4: Anbringung des Belagwerkstoffes mittels Magnetstreifen, Querschnittdarstellung;
- Fig. 5: Schnitt B-B durch Fig. 4.

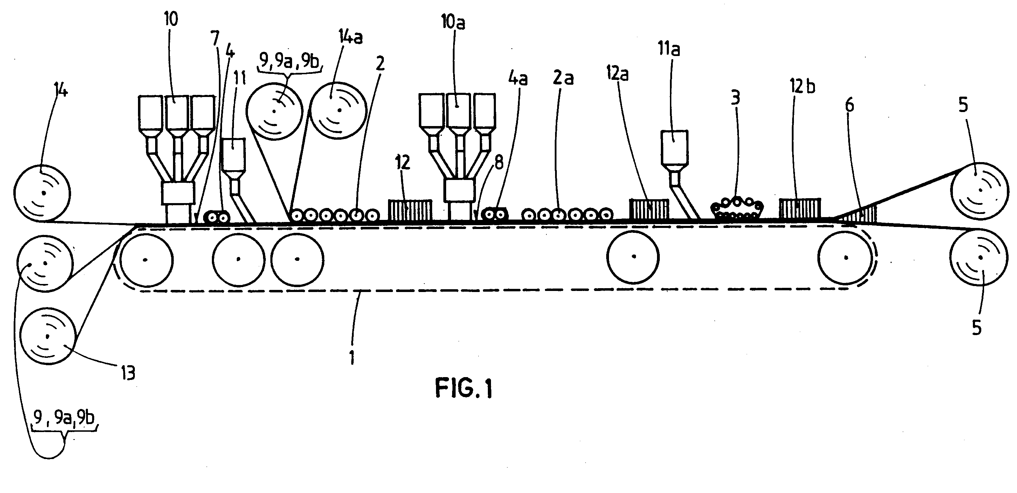

Fig. 1 zeigt eine Anlage zur Herstellung des erfindungsgemässen Belagwerkstoffes mit ausgewählten Vorrichtungen, die dem Transportband 1 zugeordnet sind. Auf das Transportband 1 kann vor Beginn der Fertigung von einer Rolle eine Trennschicht 13 aus Silikon oder Teflon aufgebracht werden, um ein Haftenbleiben der aufzubringenden Mischung auf dem Transportband 1 zu vermeiden. Anschliessend können wahlweise textile Gittergewebe 9, Magnetstreifen 9a, Klettverschlüsse 9b und/oder Klebstreifen von weiteren Rollen auf die Bandseiten und/oder mittig oder ganzflächig auf das Transportband 1 aufgebracht werden. Bei Bedarf kann danach eine mattenartige Faserheizung 14, insbesondere eine Carbonfaserheizung, von einer weiteren Rolle abgewickelt und auf das Transportband 1 aufgelegt werden. In dem kontinuierlichen Mischer 10 werden die eingegebenen Materialien miteinander vermischt und anschliessend auf das Transportband 1 gegeben. Die verdichtete, bereits anreagierte Mischung besteht insbesondere aus Gummiabfällen und/oder Gummigranulat mit einem PU-Bindemittel, der mineralische Stoffe, wie Quarzsand, Quarzkies, Splitte und/oder auch Granulate, Fasern oder Mehl aus Polyurethan, Polyvinylchlorid, Polypropylen, Polyamid, Polyethylen, Schaumflocken, Agglomerate, Kork, Holz oder gleichwertigen Primär- oder Sekundär-Kunststoffe beigemischt werden. Als weiteres Bindemittel wird je nach gewünschter Elastizität ausser dem PU-Bindemittel eine Mischung aus PU-Beschichtungsmasse beigegeben und ferner kann auch Latex, Silikon, Kautschukbinder, Epoxyd und Polyester zugemischt werden.

Gemäss Fig. 1 wird die auf das Transportband 1 aufgebrachte erste Schicht 7 der Mischung wird nun durch die in Fig. 1 dargestellten horizontal quer zur Bandbewegung oszillierend beweglichen Verdichtungsbohlen 4 verdichtet. Zur Herstellung eines einlagigen Belagwerkstoffes 5 wird auf die einschichtige Mischung nun aus der Auftragsstation 11 Beschichtungsmasse aufgegeben. Sollte die Unterseite des Belagwerkstoffes 5 zu Beginn des Verfahrens noch nicht mit Faserheizung 14 und/oder Haftmaterialien versehen sein, so können diese Elemente noch auf die Oberseite des noch nicht ausgehärteten Belagwerkstoffes 5 derart aufgetragen werden, dass die Haftmaterialien den Abschluss bilden. Über die Oberseite des Belagwerkstoffes 5 erfolgt später die Befestigung der einzelnen Belagbahnen. Anschliessend erfolgt eine Verdichtung des Materials durch Druckwalzen 2 mit folgender Erhärtung mittels Heizkanal 12. Soll ein mehrlagiger Belag hergestellt werden, so kann nun der Auftrag einer weiteren Schicht 8 aus dem kontinuierlichen Mischer 10a auf das Transportband 1 erfolgen mit anschliessender Verdichtung durch die Verdichtungsbohlen 4a und die Druckwalzen 2a sowie Erhärtung mittels Heizkanal 12a. Aus der Auftragsstation 11a kann anschliessend eine glatte oder eine mit Granulaten versehene Beschichtungsmasse zur Herstellung strukturierter Oberflächen auf den Belagwerkstoff 5 aufgegeben werden, die mittels Bandpresse wiederum verdichtet und im Heizkanal 12b erhärtet wird. Der fertige Belagwerkstoff 5 wird auf bereitstehende Rollen gewickelt. Sollte er beidseitig strukturiert hergestellt sein, wird er durch die Spalteinrichtung 6 mittig gespalten, um so den doppelten Produktionsausstoss zu erhalten.

Die dem Transportband 1 zugehörigen Einrichtungen zur Bearbeitung des Belagwerkstoffes 5 können sehr variabel entsprechend der geforderten Verwendung des Belags eingesetzt werden. Die Verdichtungseinrichtungen können abwechselnd oder gleichzeitig einsetzbar am Transportband 1 vorgesehen sein. Weiterhin können die nach vollendeter Mischungsauftragung eingesetzten Verdichtungseinrichtungen profilierte Oberflächen aufweisen zum Einprägen von Profilen mit Tiefen von ca 0,4 bis 50 mm in den Belagwerkstoff 5. Auch kann durch profilierte Transport- und Prägebänder eine Strukturierung während der Fertigung herstellt werden, wobei diese Bänder bei der Herstellung mehrlagiger Belagwerkstoffe 5 sich auch beidseitig der aufgetragenen Mischung befinden können, wonach eine anschliessende Spaltung des fertigen Materials vorgenommen wird. Auch kann das Aushärten der Mischung durch ober- und unterhalb des Transportbandes 1 angebrachte Heizkanäle 12, 12a, 12b oder dgl. Einrichtungen zur Wärmeabgabe erfolgen.

Einzelne Schichten von mehrlagigen Belägen können auch nur aus Gummiabfällen und/oder Gummigranulat aus Neu- oder Altgummi mit PU-Beschichtungsmasse oder nur aus einer PU-Beschichtungsmasse bestehen. Die Dicke einer Schicht kann 2 bis 100 mm betragen, die Dicke weiterer Schichten je 0,5 bis 30 mm.

Zur Herstellung des Belagwerkstoffes 5 dienen die mit dem Transportband 1 zusammenwirkenden beschriebenen Einrichtungen zur Verdichtung, wie Druckwalzen 2 und 2a, Bandpressen 3, Verdichtungsbohlen 4 und 4a; sowie Einrichtungen zur Aushärtung, wie Heizkanal 12, 12a und 12b, Heizwalzen u. a. Heizaggregate, die eine Temperatur bis zu 250 Grad C erzeugen und nacheinander oder auch gleichzeitig einsetzbar sind. Die Einrichtungen zur Verdichtung sowie das Transportband 1 sind nach einer abgewandelten Vorrichtung mit Faserheizelementen versehen, so dass sie bereits während des Herstellungs- und Verdichtungsvorganges das Aushärten mit übernehmen. Vorteilhafterweise kann das Transportband 1 mit einer Carbonfaserheizung ausgestattet sein, die sich im Band und/oder an seinen Ober- und Unterseiten befinden kann.

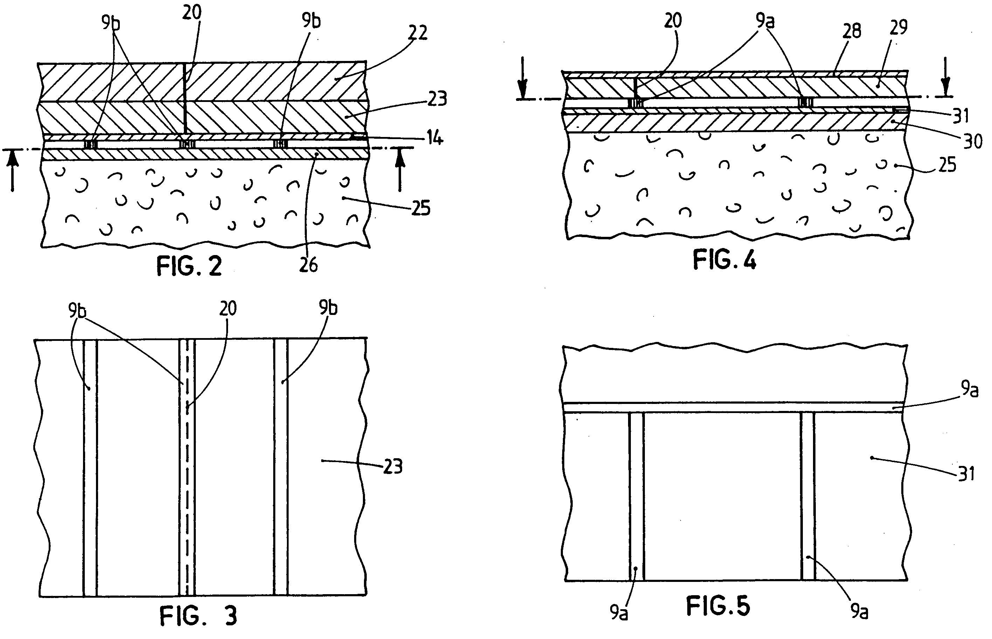

Die Anwendung des erfindungsgemässen Belagwerkstoffes 5 wird anhand der Fig. 2 bis 5 erläutert. Fig. 2 zeigt den Schnitt durch einen Belagwerkstoff 5, dessen Belagbahnen mittels Klettverschluss 9b untereinander und auf einer Tragschicht 25 befestigt sind. In Fig. 2 ist über der Tragschicht 25 ein Vlies 26 angeordnet, auf dem die Klettverschlüsse 9b gut haften, welche sich an der Unterseite einer mattenartigen Faserheizung 14 befinden. Die Faserheizung 14, hier eine Carbonfaserheizung, ist fest mit der Belag-Unterschicht 23 verbunden. Auf dieser befindet sich wiederum die Belag-Oberschicht 22 fest verbunden, wobei beide Schichten die Fuge 20 aufweisen. Fig. 2 zeigt den Schnitt A-A von unten direkt auf die Faserheizung 14 mit parallel verlaufenden Klettverschlüssen 9b.

Fig. 4 zeigt den Schnitt B-B durch einen mittels Magnetstreifen 9a befestigten Belagwerkstoff 5. Die Tragschicht 25 besteht aus Estrich oder Asphalt. Über ihr wurde ein befestigter Unterbau 30 aus Bitumen hergestellt, der mit ferritischen Platten oder mit einer ferritischen Folie 31 streifenartig oder ganz bedeckt ist. Darüber sind die Magnetstreifen 9a zu erkennen, die fest mit der Unterseite der Belagschicht 29 verbunden sind. Über der Belagschicht 29 befindet sich eine abschliessende Deckschicht 28. In Fig. 5 als Schnitt B-B über den Magnetstreifen 9a ist die ferrittische Folie 31 mit den auf ihr haftenden parallel und rechteckig angeordneten Magnetstreifen 9a zu sehen. Der horizontal liegende Magnetstreifen 9a verbindet gleichzeitig mit der Unterbauhaftung die ferritische Folie 31 mit der angrenzenden Folie 31a. Mit den gezeigten und beschriebenen demontierbaren Anwendungsmöglichkeiten ist der Belagwerkstoff 5 entsprechend dem vorgesehenen Verwendungszweck leicht auswechselbar.

Besonders vorteilhaft erweist sich die Einbeziehung einer Carbonfaserheizung in den Belagwerkstoff 5, da hierdurch Draht- und Heizkörper jeglicher Art, Heizeinrichtungen einschliesslich deren Rohrsystem sowie Wartung und Unterhaltung entfallen. Da der Belag auch mit enthaltender Carbonfaserheizung eine geringe Dicke aufweist, eignet er sich besonders auch für die Renovierung und Sanierung von bestehenden Gebäuden und Anlagen. Dabei kann eine vollflächige Belegung oder nur eine partielle Ausstattung mit beheizbarem Belag vorgesehen werden.

Auch die Herstellung sehr dünner Beläge weist auf erweiterte Verwendungsmöglichkeiten beispielsweise als Oberbelag im Wohn-, Büro- und Industriebereich; auch als Ersatz für PVC-Beläge. Weiterhin können die dünnen Beläge als Trittschall- und Wärmedämmbelag im Wohn-, Büro- und Industriebereich verwendet werden, wobei auf den Belagwerkstoff 5 alle bekannten Oberbeläge wie Keramikplatten, Holzböden, synthetische Beläge, textile Beläge usw. verlegt werden können.

Auf den verlegten Belagwerkstoff 5, insbesondere bei Tennisplätzen, kann ein EPDM-Granulat von einer Körnung von 0,02 bis 5 mm aufgestreut werden, das ein Gewicht zwischen 0,2 bis 2,0 kg/Quadratmeter aufweist.

## Patentansprüche

1. Verfahren zum Herstellen eines bahnenförmigen Belagwerkstoffes aus einer verdichteten Mischung aus Gummiteilen, insbesondere Gummiabfällen unter Benutzung eines umlaufenden endlosen Transportbandes (1), auf welches die Schicht (7) aus einer bereits anreagierten Mischung aus zerkleinerten Gummiabfällen und/oder Gummigranulat aus Neu- oder Altgummi mit einem lösungsmittelfreien Einkomponenten-PU-Bindemittel aufgebracht wird, und wobei die Mischung anschiessend unter Druck und/oder Vibratorwirkung verdichtet und unter Wärmeeinwirkung ausgehärtet wird,
dadurch gekennzeichnet,
dass der Mischung (7) als zusätzliche wesentliche Mischungs-Bestandteile Polyurethan als Beimischungsmasse mittels einer Auftragstation (11) und als weitere Bindemittel Silikon, Kautschuckbinder, Epoxyd und/oder Polyesther sowie ferner mineralische Stoffe wie Quarzsand, Quarzkies, Splitte o. dgl. beigegeben werden.

2. Verfahren zum Herstellen eines bahnenförmigen Belagwerkstoffes aus einer verdichteten Mischung aus Gummiteilen, insbesondere Gummiabfällen unter Benutzung eines umlaufenden endlosen Transportbandes (1), auf welches die Schicht (7) aus einer bereits anreagierten Mischung aus zerkleinerten Gummiabfällen und/oder Gummigranulat aus Neu- oder Altgummi mit einem lösungsmittelfreien Einkomponenten-PU-Bindemittel aufgebracht wird, und wobei die Mischung anschliessend unter Druck und/oder Vibratorwirkung verdichtet und unter Wärmeeinwirkung ausgehärtet wird.
dadurch gekennzeichnet,
dass der Mischung (7) als zusätzliche wesentliche Mischungs-Bestandteile Polyurethan als Beimischungsmasse mittels einer Auftragstation (11) und als weiteres Bindemittel Latex sowie ferner mineralische Stoffe wie Quarzsand, Quarzkies, Splitte, o.dgl. beigegeben werden.

3. Verfahren nach Anspruch 1 oder 2, dadurch gekennzeichnet, dass der Mischung Granulate, Agglomerate, Fasern, Flocken oder Mehl aus Polyurethan, Polyvinylchlorid, Polypropylen, Polyamid, Polyethylen aus Primär- oder recycelten Sekundärstoffen oder aus Kork oder Holz zugegeben werden.

4. Verfahren nach Anspruch 1 oder 2, dadurch gekennzeich net, dass das Verdichten unter Anwendung von vorzugsweise Druckwalzen (2) oder Druckstempeln, Bandpressen (3) oder Doppelbandpressen und horizontal quer zur Bandbewegung oszillierend beweglichen Verdichtungsbohlen (4) erfolgt.

5. Verfahren nach Anspruch 4, dadurch gekennzeichnet, dass mittels profilierter Druckwalzen (2), profilierten Transportbändern (1) und Prägebändern und/oder profilierten Bandpressen (3) oder Doppelbandpressen ein- oder beidseitig eingeprägt strukturierte Oberflächen mit Profiltiefen von etwa 0,4 bis 50 mm erzeugt werden.

6. Verfahren nach einem oder mehreren der Ansprüche 1 bis 5, dadurch gekennzeichnet, dass ein- und mehrlagige Belagwerkstoffe (5) mit beidseitig glatter oder strukturierter Oberfläche nach dem Strukturiervorgang mittels einer Spaltanlage (6) gespalten werden.

7. Verfahren nach Anspruch 1 oder 2, dadurch gekennzeichnet, dass das Aushärten der Mischung unter Wärmeeinwirkung an deren Ober- und/oder Unterseite erfolgt.

8. Verfahren nach Anspruch 1 oder 2, dadurch gekennzeichnet, dass die Mischung vor oder nach dem Aushärten mit Beschichtungs- oder Versiegelungsmassen mit glatter oder einer durch Einstreugranulate erzeugten strukturierte Oberfläche versehen wird.

9. Verfahren nach Anspruch 1 oder 2, dadurch gekennzeichnet, dass auf die auf das Transportband (1) aufgetragene Erstschicht (7) mittels wenigstens einem weiteren kontinuierlichen Mischer (10a) und wenigstens einer weiteren Auftragstation (11a) Schichten (8) aus verschiedenen zusammengesetzten Stoffmischungen entsprechend den in den vorangehenden Ansprüchen 1 bis 3 genannten Stoffkombinationen aufgetragen werden.

10. Verfahren nach Anspruch 1 oder 2, dadurch gekennzeichnet, dass die Dicke wenigstens einer Schicht (7) des erzeugten Belagwerkstoffes (5) 2 bis 100 mm, die Dicke von weiteren Schichten je 0,5 bis 30 mm beträgt.

11. Verfahren nach Anspruch 1, dadurch gekennzeichnet, dass die Mischungsanteile bei einlagigen Belägen Bindemittel 2 bis 30% Gewichtsprozent und Gummigranulat sowie Beimischungen 70 bis 98% Gewichtsprozent betragen.

12. Verfahren nach Anspruch 9, dadurch gekennzeichnet, dass die Mischungsanteile bei mehrlagigen Belägen (7, 8) je weiterer Schicht einen PU-Beschichtungsanteil von wenigstens 20 Gewichtsprozent, einen Gummigranulatanteil von 20 bis 60 Gewichtsprozent und andere Anteile von 20 bis 60 Gewichtsprozentanteil aufweisen.

13. Verfahren nach Anspruch 1, dadurch gekennzeichnet, dass dem PU-Bindemittel 0,5 bis 50 Gewichtsprozent Anteile Wasser zugesetzt werden.

14. Verfahren nach Anspruch 9 und 12, dadurch gekennzeichnet, dass zwischen die Schichten mehrlagiger Beläge jeweils ein textiles Gittergewebe eingebracht wird.

15. Verfahren nach Anspruch 1 oder 2, dadurch gekennzeichnet, dass vor Aufbringen der ersten Schicht (7) der Mischung auf das Transportband (1) ein textiles Gitter- oder Trägergewebe und/oder Magnetstreifen und/oder textile Klettverschlusssysteme und/oder Faserheiz-Elemente, insbesondere aus Carbonfasern, aufgebracht und mit der danach aufgegebenen ersten Schicht (7) gebunden und fixiert werden.

16. Verfahren nach Anspruch 14 oder 15, dadurch gekennzeichnet, dass die aufgebrachten Halte-, Träger- und Heizmaterialien nachträglich auf die verdichtete, noch nicht ausreagierte letzte Schicht der Mischung aufgetragen, angedrückt und gebunden werden.

17. Vorrichtung zum Herstellen eines bahnenförmigen Belagwerkstoffes in ein- oder mehrlagiger Ausführung mit einem kontinuierlichen Mischer (10) zum Auftragen wenigstens einer Schicht (7) aus einer bereits anreagierten Mischung aus zerkleinerten Gummiabfällen und/oder Gummigranulat aus Neu- oder Altgummi, die mit einem lösungsmittelfreien PU-Bindemittel unter Beimischung von mineralischen Stoffen auf ein umlaufendes endloses Tranportband (1) aufgebracht wird, mit Einrichtungen zur anschliessenden Verdichtung, wie wenigstens eine Druckwalzenanordnung (2) sowie Einrichtungen zur Wärmebeaufschlagung, wie einem oder mehreren Heizkanälen (12) zur Aushärtung und Reaktionsbeschleunigung der Mischung, wobei
a) dem kontinuierlichen Mischer (10) zum Auftragen einer ersten Schicht (7) nachfolgend quer zur Bandrichtung oszillierend arbeitende Verdichtungsbohlen (4) vorgesehen sowie
b) anschliessend eine Auftragstation (11) zum Auftragen von zusätzlicher Beimischungsmasse und ferner
c) dieser eine Druckwalzenanordnung (2) und darauffolgend einer oder mehrere Heizkanäle (12) nachgeschaltet sind.

18. Vorrichtung zum Herstellen eines bahnenförmigen Belagwerkstoffes in ein- oder mehrlagiger Ausführung mit einem kontinuierlichen Mischer (10) zum Auftragen wenigstens einer Schicht (7) aus einer bereits anreagierten Mischung aus zerkleinerten Gummiabfällen und/oder Gummigranulat aus Neu- oder Altgummi mit einem lösungsmittelfreien PU-Bindemittel unter Beimischung von mineralischen Stoffen auf ein umlaufendes endloses Tranportband (1) aufgebracht wird, mit Einrichtungen zur anschliessenden Verdichtung, wie wenigstens eine Druckwalzenanordnung (2) sowie Einrichtungen zur Wärmebeaufschlagung, wie einem oder mehreren Heizkanälen (12) zur Aushärtung und Reaktionsbeschleunigung der Mischung, wobei
dem kontinuierlichen Mischer (10) und der anschliessend angeordneten Auftragsstation (11) zum Auftragen von zusätzlicher Beimischungsmasse mit den zugehörigen Verdichtungs- und Wärmebeaufschlagungsvorrichtungen nachfolgend
a) wenigstens ein weiterer kontinuierlicher Mischer (10a) mit anschliessend angeordneten quer zur Bandrichtung oszillierend arbeitenden Verdichtungsbohlen (4a),
b) diesen nachfolgende eine weitere Druckwalzenanordnung (2a) und wenigstens ein weiterer Heizkanal (12a), und
c) anschliessend daran eine weitere Auftragstation (11a) zum Auftragen weiterer zusätzlicher Beimischungsmasse oder einer Beschichtungsmasse mit nachfolgenden weiteren Verdichtungs- und Wärmebeaufschlagungsvorrichtungen
vorgesehen sind.

19. Vorrichtung nach Anspruch 17 oder 18, wobei die metallische oder textile Oberfläche des Transportbandes (1) profiliert ausgebildet ist.

20. Vorrichtung nach Anspruch 17 oder 18, wobei das mit einer profilierten Oberfläche versehene, aus textilem Material oder Metall bestehende Transportband (1) eine als Oberflächen-Trennschicht wirkende Beschichtung, vorzugsweise aus Silikon oder Teflon (13) aufweist.

21. Vorrichtung nach Anspruch 17 oder 18, wobei die textile Oberfläche des Transportbandes (1) eine Faserheizung, insbesondere eine Carbonfaserheizung im Band und/oder an der Unter und/oder Oberseite des Bandes aufweist.

22. Vorrichtung nach Anspruch 17 oder 18, wobei eine von einer Vorratsrolle abziehbare auf das Transportband (1) vor Auftragen der Mischung auflegbare glatte oder profilierte Trennfolie (13) vorgesehen ist.

23. Vorrichtung nach Anspruch 17 oder 18, wobei die einer Schichtauftragung nachgeschaltete Verdichtungsvorrichtung als Bandpresse (3) oder Doppelbandpresse ausgelegt ist und eine Vorrichtung zur Zuführung wenigstens einer glatten oder profilierten Trennfolie zur ober- und/oder unterseitigen Auflage auf die Belagschicht aufweist.

## Claims

1. Process for producing a web-like covering material of a compressed mix of small rubber parts, especially of scrap rubber, using a continuous conveyor belt (1) onto which the layer (7) of an already reacting mix of crumbled scrap rubber and/or of granulated new or scrap rubber, together with a solventless unitary PUR binder, will be applied, and the mix will subsequently be rammed under pressure and/or the action of a vibrator and cured by heat,
characterized in
that, as vital supplementary components, polyurethane will be added to the mix (7) as an admixture by an applicator station (11) and, as further binders, silicone, caoutchouc binders, epoxy and/or polyester as well as some mineral aggregates, like quartz powder, coarse silica sand, grits or similar materials, will be added to said mix.

2. Process for producing a web-like covering material of a compressed mix of small rubber parts, especially of scrap rubber, using a continuous conveyor belt (1) onto which the layer (7) of an already reacting mix of crumbled scrap rubber and/or of granulated new or scrap rubber, together with a solventless unitary PUR binder, will be applied, and the mix will subsequently be rammed under pressure and/or the action of a vibrator and cured by heat,
characterized in
that, as vital supplementary components, polyurethane will be added to the mix (7) as an admixture by an applicator station (11) and latex, a further binder, as well as some mineral aggregates, such as quartz powder, coarse silica sand, grits or the like will be added to this mix.

3. Process according to claim 1 or 2, characterized in that granules, agglomerates, fibers, flocks or powder of polyurethane, polyvinyl chloride, polypropylene, polyamide, polyethylene, of primary or recycled secondary materials, or of cork or wood will be added to the mix.

4. Process according to claim 1 or 2, characterized in that ramming is preferably carried out by pressing rollers (2) or pressure bars, single or double belt presses (3) and by compression planks (4), oscillating horizontally and across the movement of the belt.

5. Process according to claim 4, characterized in that by means of profiled pressing rollers (2), profiled conveyor belts (1) and embossing belts and/or profiled single or double belt presses (3), structured surfaces, embossed at one or both sides, will be produced, same having profile depths from 0,4 to 50 mm approx.

6. Process according to one or several of the claims 1 to 5, characterized in that single- and multi-layer covering materials (5), of which the surface is smooth or structured at both sides, will be split by a splitting system (6) after the structuring operation.

7. Process according to claim 1 or 2, characterized in that curing of the mix will be done by applying heat to its upper and/or lower side.

8. Process according to claim 1 or 2, characterized in that, prior to or after curing, the mix will be provided with coating or sealing compounds with a smooth or structured surface, the latter obtained by spread granules.

9. Process according to claim 1 or 2, characterized in that by means of at least one further continuous mixer (10a) and at least one further applicator station (11a), layers (8) of different material compositions and corresponding to the material combinations mentioned in the preceding claims 1 to 3 will be applied to the basic layer (7) filled up on the conveyor belt (1).

10. Process according to claim 1 or 2, characterized in that the thickness of at least one layer (7) of the produced covering material (5) will be 2 to 100 mm and the thickness of further layers 0,5 to 30 mm each.

11. Process according to claim 1, characterized in that with single-layer coverings, the mix fractions of the binders amount to 2 to 30 percent in weight and those of the rubber granules as well as of the admixtures come to 70 to 98 percent in weight.

12. Process according to claim 9, characterized in that with multi-layer coverings, the mix fractions (7, 8) for each further layer show a PUR coating portion of 20 percent in weight min., a portion of rubber granules of 20 to 60 percent in weight and other portions of 20 to 60 percent in weight.

13. Process according to claim 1, characterized in that portions of water of 0,5 to 50 percent in weight will be added to the PUR binder.

14. Process according to claims 9 and 12, characterized in that between the coats of the multi-layer coverings, one textile grid each will be placed.

15. Process according to claim 1 or 2, characterized in that prior to applying the basic layer (7) of the mix onto the conveyor belt (1), a textile grid or substrate and/or magnetic stripes and/or textile Velcro fasteners and/or fiber heating elements, especially of carbon fibers, will be applied thereto as well as bound and set by the basic layer (7) subsequently fed.

16. Process according to claim 14 or 15, characterized in that the fastening, supporting and heating materials will subsequently be placed on the last layer of the mix, compressed but further reacting, and then pressed against same and bound.

17. Device for producing a web-like covering material in single- or multi-layer finish using a continuous mixer (10) to place at least one layer (7) of an already reacting mix of crumbled scrap rubber and/or rubber granules of new or used rubber which will be fed, together with a solventless PUR binder and by adding mineral aggregates, onto a continuous conveyor belt (1) comprising some equipment for later ramming, e.g. one or more pressing roller systems (2), as well as some equipment for heat supply, such as one or several heating channels (12) for curing and to accelerate the reaction of the mix, in which
a) the continuous mixer (10) to apply a basic layer (7) is followed by compression planks (4) oscillating across the direction of the belt and
b) an applicator station (11) to feed an additional admixture follows said planks and, moreover, following
c) a pressing roller system (2) and one or more heating channels (12).

18. Device for producing a web-like covering material in single- or multi-layer finish comprising a continuous mixer (10) to apply at least one layer (7) of an already reacting mix of disintegrated scrap rubber and/or granules of new or used rubber, with a solvent-free PUR binder and added mineral substances, onto a continuous conveyor belt (1) equipped for subsequent ramming with at least one pressing roller system (2), also comprising equipment for heat supply, e.g. one or several heating channels (12) for curing and accelerating the reaction of the mix, this device including the continuous mixer (10) and the subsequently arranged applicator station (11) to feed supplementary admixture, with the pertinent compression and heat supply equipment, followed by
a) at least one further continuous mixer (10a) with subsequent compression planks (4a) oscillating across the direction of the belt,
b) thereafter a further pressing roller system (2a) and a further heating channel (12a) as a minimum, and
c) subsequently arranged, a further applicator station (11a) to feed a supplementary admixture or a coating compound, together with the following additional compression and heat supply equipment.

19. Device according to claim 17 or 18, in which the metal or textile surface of the conveyor belt (1) has been profiled.

20. Device according to claim 17 or 18, in which the conveyor belt (1), consisting of textile material or metal and provided with a profiled surface, will show a coat, preferably of silicone or teflon (13), acting as a surface parting layer.

21. Device according to claim 17 or 18, in which the textile surface of the conveyor belt (1) will show a fiber heating, especially a carbon fiber heating within the belt and/or at the lower and/or at the upper side of the belt.

22. Device according to claim 17 or 18, in which a smooth or profiled separating foil (13) has been provided, unwindable from a supply reel and feedable onto the conveyor belt (1) prior to the application of the mix.

23. Device according to claim 17 or 18, in which the compression equipment, subsequent to the layer application area, will be designed as a belt press (3) or a double belt press showing a unit to deliver at least one smooth or profiled separating foil which will be placed on the upper and/or lower side of the covering layer.

## Revendications

1. Procédé pour la fabrication d'un matériau de revêtement en forme de bande d'un mélange comprimé de petites pièces de caoutchouc, spécialement de déchets de caoutchouc, à l'aide d'une courroie transporteuse (1) sans fin sur laquelle s'alimente la couche (7) consistant en un mélange déjà réagissant de déchets de caoutchouc broyés et/ou de granulés de caoutchouc neuf ou usage, avec un liant PUR à une composante exempt de solvants, mélange serré ensuite par pression et/ou l'effet d'un vibrateur et cuit par l'action thermique,
caractérisé par ce
que s'ajoutent au mélange (7), en tant qu'éléments de mélange supplémentaires d'importance, un additif de polyuréthane à l'aide d'une station de charge (11) et, comme d autres liants, de la silicone, des additifs de caoutchouc, de la résine époxy et/ou du polyester ainsi qu'en outre des aggrégats minéraux, p. ex. sable et gravier silicieux, gravillons et autres matériaux semblables.

2. Procédé pour la fabrication d'un matériau de revêtement en forme de bande d'un mélange comprimé de petites pièces de caoutchouc, spécialement de déchets de caoutchouc, à l'aide d'une courroie transporteuse (1) sans fin sur laquelle s'alimente la couche (7) consistant en un mélange déjà réagissant de déchets de caoutchouc broyés et/ou de granulés de caoutchouc neuf ou usage, avec un liant PUR à une composante exempt de solvants, mélange serre ensuite par pression et/ou l'effet d'un vibrateur et cuit par l'action thermique,
caractérisé par ce
qu'en tant que composants de mélange supplémentaires essentiels, du polyuréthane s'ajoute au mélange (7) comme masse d'addition par une station de charge (11) et, comme liant additionnel, s'ajoute du latex et se joignent encore des aggrégats minéraux, soit du sable et du gravier silicieux, des gravillons ou d'autres produits similaires.

3. Procédé selon revendication 1 ou 2, caractérisé par ce que s'ajoutent au mélange, des granulés, des agglomérats, des fibres, des flocons ou de la poudre de polyuréthane, de chlorure de polyvinyle, de polypropylène, de polyamide, de polyéthylène, de matériaux primaires ou de matériaux secondaires récupérés ou de liège respectivement de bois.

4. Procédé selon revendication 1 ou 2, caractérisé par ce que le serrage s effectue préférablement par des cylindres de pression (2) ou des étais comprimeurs, des presses à ruban (3) simples ou doubles et par des planches de serrage (4) oscillant horizontalement et transversalement au mouvement du ruban.

5. Procédé selon revendication 4, caractérisé par ce que se produisent des surfaces structurées, estampées d'un seul ou des deux côtés, ayant des profondeurs de profil d'environ 0,4 à 50 mm, au moyen des cylindres de pression (2) profilés, des courroies transporteuses (1) profilées, des rubans à estamper et/ou des presses à ruban (3) profilé simple ou double.

6. Procédé selon une ou plusieurs des revendications 1 à 5, caractérisé par ce que des matériaux de revêtement (5) à une seule ou à plusieurs couches, des deux côtés avec une surface lisse ou structurée, se fendent après le procédé de structuration par un dispositif de fendage (6).

7. Procédé selon revendication 1 ou 2, caractérisé par ce que la cuisson du mélange sera réalisée par l'effet de la chaleur à son côté supérieur et/ou inférieur.

8. Procédé selon revendication 1 ou 2, caractérisé par ce que le mélange sera doté, avant ou après la cuisson, des masses de couchage ou de scellement ayant une surface lisse ou structurée par des granulés de distribution.

9. Procédé selon revendication 1 ou 2, caractérisé par ce que sur la couche primaire (7) alimentée à la courroie transporteuse (1), seront appliquées des couches (8) de différents mélanges de matériaux conformes aux combinaisons de matières indiquées dans les revendications 1 à 3 ci-avant, par au moins un mélangeur continu (10a) supplémentaire et une autre station de charge (11a) min.

10. Procédé selon revendication 1 ou 2, caractérisé par ce que l'épaisseur d'au moins une seule couche (7) du matériau de revêtement (5) fabriqué est de 2 à 100 mm, l'épaisseur d'autres couches étant de 0,5 à 30 mm chacune.

11. Procédé selon revendication 1, caractérisé par ce qu'en cas de matériaux de revêtement à une seule couche, les ingrédients de mélange sont de 2 à 30 % en poids pour les liants et de 70 à 98 % en poids pour les granulés de caoutchouc et les additifs.

12. Procédé selon revendication 9, caractérisé par ce que les ingrédients de mélange par couche supplémentaire des matériaux de revêtement multicouche (7, 8) sont de 20 % en poids, au minimum, pour la couche en PUR, de 20 à 60 % en poids pour les granulés de caoutchouc et de 20 à 60 % en poids pour les autres composants.

13. Procédé selon revendication 1, caractérisé par ce qu'une portion d'eau de 0,5 à 50 % en poids s'ajoute au liant PUR.

14. Procédé selon revendications 9 et 12, caractérisé par ce qu'en cas de matériaux de revêtement multicouche, un tissu à reseau textile s'introduit entre chaque deux couches.

15. Procédé selon revendication 1 ou 2, caractérisé par ce qu'avant l'application de la première couche (7) du mélange à la courroie transporteuse (1) s'y placent un tissu à réseau textile ou un tissu support textile et/ou des bandes magnétiques et/ou des rubans cramponnants en textile et/ou des éléments de chauffage à fibres, notamment à fibres carbone, qui se lient et se fixent alors par la première couche y appliquée.

16. Procédé selon revendication 14 ou 15, caractérisé par ce que les matériaux de retenue, de support et de chauffage se placent ultérieurement sur la dernière couche de mélange serrée dont la réaction n'a pas encore terminé, se pressent contre cette couche et se lient.

17. Dispositif pour la fabrication d'un matériau de revêtement en forme de bande en exécution à une seule ou à plusieurs couches, avec un mélangeur continu (10) pour appliquer, au moins, une seule couche (7) de mélange, déjà réagissant, de déchets de caoutchouc broyés et/ou de granulés de caoutchouc neuf ou usagé, couche qui s'alimente à une courroie transporteuse (1) sans fin, avec un liant PUR exempt de solvants en ajoutant des aggrégats minéraux, dispositif avec des appareils pour le serrage postérieur, une batterie de cylindres de pression (2) min., et avec des appareils pour alimenter la chaleur, p.ex. un ou plusieurs conduits de chauffage (12) nécessaires à la cuisson et à la réaction accélérée du mélange, appareils disposés dans l'ordre suivant,
a) le mélangeur continu (10) pour appliquer la première couche (7) et des planches de serrage (4) oscillant transversalement à la direction du ruban,
b) la station de charge (11) pour appliquer des additifs,
c) la batterie de cylindres de pression (2) et un ou plusieurs conduits de chauffage (12).

18. Dispositif pour la fabrication d'un matériau de revêtement en forme de bande en exécution à une seule ou à plusieurs couches, avec un mélangeur continu (10) pour appliquer, au moins, une seule couche (7) de mélange, déjà réagissant, de déchets de caoutchouc broyés et/ou de granulés de caoutchouc neuf ou usagé, couche qui s'alimente à une courroie transporteuse (1) sans fin, avec un liant PUR exempt de solvants en ajoutant des aggrégats minéraux, dispositif avec des appareils pour le serrage postérieur, une batterie de cylindres de pression (2) min., et avec des appareils pour alimenter la chaleur, p.ex. un ou plusieurs conduits de chauffage (12) nécessaires à la cuisson et à la reaction accélérée du mélange, et après le mélangeur continu (10) et la station de charge (11) pour alimenter des additifs, disposée ensuite, avec ses appareils de serrage et d'alimentation de chaleur, ont été prévus dans l'ordre consécutif,
a) un mélangeur continu supplémentaire (10a) min. ayant, disposées après lui, des planches de serrage (4a) oscillant transversalement à la direction du ruban,
b) alors une autre batterie de cylindres de pression (2a) et, au moins, un conduit de chauffage supplémentaire (12a) et
c) finalement, une autre station de charge (11a) pour alimenter des additifs ou des masses de couchage, avec des appareils de serrage et d'alimentation de chaleur additionnels qui la suivent.

19. Dispositif selon revendication 17 ou 18, avec lequel la surface métallique ou textile de la courroie transporteuse (1) présente une exécution profilée.

20. Dispositif selon revendication 17 ou 18, avec lequel la courroie transporteuse (1) consistant en matière textile ou en métal, a été munie d'un revêtement agissant comme une couche de séparation en surface, préférablement de silicone ou de téflon (13), courroie ayant une surface profilée.

21. Dispositif selon revendication 17 ou 18, avec lequel la surface textile de la courroie transporteuse (1) présente un chauffage à fibres, notamment un chauffage à fibres carbone, aussi dans la courroie et/ou à la face inférieure et/ou à la face supérieure de cette dernière.

22. Dispositif selon revendication 17 ou 18, avec lequel on a prévu un film de séparation (13) lisse ou profilé, à tirer d'un rouleau d'alimentation et à placer sur la courroie transporteuse (1) avant d'appliquer le mélange.

23. Dispositif selon revendication 17 ou 18, avec lequel l'appareil de serrage, disposé après la zone d'application de couche, a été conçu en tant que presse à ruban simple ou double (3) comportant un appareil pour alimenter, au moins, un seul film de séparation lisse ou profilé à placer sur la face supérieure et/ou sur la face inférieure de la couche de matériaux.
